# EUROPÄISCHE PATENTSCHRIFT

(11) **EP 2 632 979 B1**
(45) Veröffentlichungstag und Bekanntmachung des Hinweises auf die Patenterteilung: **21.01.2015**
(21) Anmeldenummer: 11788363.7
(22) Anmeldetag: 25.10.2011
(51) Int. Cl.: C08K 5/53

(54) **FLAMMWIDRIGE POLYESTERCOMPOUNDS**
FLAME-RETARDANT POLYESTER COMPOUNDS
COMPOSÉS DE POLYESTER INHIBITEURS DE COMBUSTION

(30) Priorität: 28.10.2010 DE 102010049968
(43) Veröffentlichungstag der Anmeldung: 04.09.2013
(73) Patentinhaber: Clariant Finance (BVI) Limited, Road Town, Tortola (VG)
(72) Erfinder: HÖROLD, Sebastian, 86420 Diedorf (DE); WANZKE, Wolfgang, 86161 Augsburg (DE); SCHLOSSER, Elke, 86163 Augsburg (DE); NASS, Bernd, 86152 Augsburg (DE)
(74) Vertreter: Jacobi, Carola
(86) Internationale Anmeldenummer: PCT/EP2011/005364
(87) Internationale Veröffentlichungsnummer: WO 2012/055532

(56) Entgegenhaltungen:
- DE-A1-102005 050 956

## Beschreibung

Die Erfindung betrifft flammwidrige Polyestercompounds mit verbesserten Brandeigenschaften und exzellenten mechanischen Eigenschaften.

Aufgrund ihrer chemischen Zusammensetzung sind viele Kunststoffe leicht brennbar. Um die von Kunststoffverarbeitern und teilweise vom Gesetzgeber geforderten hohen Flammschutzanforderungen erreichen zu können, müssen Kunststoffe daher in der Regel mit Flammschutzmitteln ausgerüstet werden. Hierzu sind eine Vielzahl unterschiedlicher Flammschutzmittel und Flammschutzmittelsynergisten bekannt und auch kommerziell erhältlich.

Nicht-halogenierte Flammschutzmittelsysteme werden seit einiger Zeit wegen ihrer vorteilhafteren Brandnebenerscheinungen bezüglich Rauchgasdichte und Rauchgaszusammensetzung sowie aus ökologischen Gründen bevorzugt eingesetzt. Unter den nicht-halogenierten Flammschutzmitteln haben sich für thermoplastische Polyester insbesondere die Salze von Phosphinsäuren (Phosphinate) als besonders wirksam erwiesen (DE-A-2 252 258 und DE-A-2 447 727). Calcium- und Aluminiumphosphinate sind in Polyestern als sehr effektiv beschrieben worden und beeinträchtigen die Materialeigenschaften der Polymerformmassen weniger als z. B. die Alkalimetallsalze (EP-A-0 699 708).

Darüber hinaus wurden synergistische Kombinationen von Phosphinaten mit verschiedenen stickstoffhaltigen Verbindungen gefunden, die in einer ganzen Reihe von Polymeren als Flammschutzmittel effektiver wirken als die Phosphinate allein (PCT/EP97/01664, DE-A-197 34 437, DE-A-197 37 727 und US-A-6,255,371).

Die WO-A-2005/059 018 beschreibt ein Polybutylenterephthalat mit einem stickstoffhaltigen Flammschutzmittel, einem Phosphinat und einem aschebildende Polymer. Aschebildende Polymere sind hier Polyetherimide, Polyphenylenether, Polyphenylensulfid, Polysulfone, Polyethersulfone, Polyphenylensulfidoxide oder Phenolharze. Durch den Zusatz des aschebildenden Polymers wird die Flammwidrigkeit verbessert. Nachteilig ist der hohe Preis der aschebildenden Polymere sowie ihre Tendenz, zu Verfärbungen zu führen.

Die DE-A-10 2005 050 956 beschreibt thermoplastische Formmassen bestehend aus einem Polybutylenterephthalat und einem Polyester verschieden von Polybutylenterephthalat (PBT) sowie Phosphinate und ein Umsetzungsprodukt aus einer stickstoffhaltigen Verbindung mit Phosphorsäure. Bevorzugt sind Kombinationen aus Polyethylenterephthalate (PET) und Polytrimethylenterephthalate. Nur durch den Zusatz von PET erhält man UL 94 V-0 sowie gute Kriechstromfestigkeit und gute mechanische Eigenschaften. Es wird ein GWIT nach IEC 60695-2-13 von 775 °C bei 1,5 mm Materialstärke erreicht.

Die US-A-2009/0239986 beschreibt flammgeschützte thermoplastische Polyesterharze mit 100 Teilen Polyester, 1 - 60 Teilen einer cyclischen oligomeren Phosphazen-Verbindung und 1 - 50 Teilen einer Melaminverbindung sowie 1 - 20 Teile einer anorganischen Metallverbindung und 0,1 - 5 Teile eines fluorierten Polyolefins. Die Melaminverbindung kann Melamin, Melamincyanurat, Melaminphosphat, -pyrophosphat oder polyphosphat sein. Die anorganische Verbindung kann u. a. Magnesiumhydroxid, Zinkborat, Zinkoxid oder Titandioxid sein. Es wird die Brandklasse UL 94 V-0 nur erreicht in Anwesenheit von einem fluorierten Polyolefin. Nachteilig an diesem System ist die schlechte Fließfähigkeit der Formmassen.

Die JP-A-2010-037375 beschreibt flammwidrige Polyesterharze mit einem Gehalt von 1 - 30 % Phosphinat, 0,01 - 3 % eines Säurefängers, 0,01 - 4 % einer Polyolkomponente, 0,1 - 10 % einer Vinylharzkomponente und ggf. zusätzliche Flammschutzmittel. Unter den vielen zusätzlichen Flammschutzmitteln werden u. a. Phosphazene erwähnt, Hinweise auf eine besondere Wirkung der Phosphazene finden sich aber nicht. In dem einzigen Vergleichsbeispiel wird in einem PBT mit Glasfasern mit 4 % Phosphinat und 1,9 % Phosphazen lediglich UL 94 V-2 und eine Kriechstromfestigkeit (CTI) von 450 V erreicht. Technisch gefordert von flammwidrigen Polyester Compounds werden heute aber UL 94 V-0 und CTI 600 V.

Die JP-A-2009-292897 beschreibt flammwidrige Polyester bestehend aus 40 - 96,5 Teilen Polyalkylenterephthalaten, 3,5 - 50 Teilen Polystyrolharze, 0 - 10 Teile Compatibilizer und dazu 100 Teile eines Flammschutzmittels, bestehend aus 10 - 60 Teilen eines Phosphazens oder Phosphinates, 20 - 70 Teilen eines Aminotriazin-Stickstoff-Flammschutzmittels und 0 - 20 Teile eines Metallborates und ein Polyphenylenlether- oder Polyphenylensulfid- oder Phenolharz. Nachteilig an der Verwendung des Polystyrolharzes, des Compatibilizers sowie der Polyphenylenlether- oder Polyphenylensulfid- oder Phenolharze ist die mangelnde Farbstabilität derartiger Zusätze, so dass sich die Farbe der flammwidrigen Polyester zu gelblich-braun hin verschiebt. Gerade von Polyester Compounds werden aber rein weiße Farbtöne verlangt.

Die EP-A-0945478 beschreibt vernetzte Phenoxyphosphazene als Flammschutzmittel und flammwidrige Polymerzusammensetzungen mit Phosphazenen. Bevorzugt werden cyano-substituierte Phenoxyphosphazene verwendet. Polymere sind thermoplastische oder duroplastische Harze, es können anorganische Füllstoffe wie Glasfasern oder Kreide enthalten sein. Als weitere Flammschutzmittel werden halogenfreie organische Phosphorverbindungen beschrieben, genannt werden Phosphate und Phosphinoxide, aber keine Phosphinate. Das thermoplastische Harz kann auch Polyester sein, als weitere Komponenten sind Fluor-haltige Harze und andere Flammschutzmittel erwähnt. Beispiele erstrecken sich auf PC/ABS, PPE/HIPS und Epoxidharze.

Die WO-A-2009/037859 beschreibt flammwidrige Polyamide mit 20 - 80 % Polyamid, 5 - 30 % einer Phosphinatverbindung und 0,01 - 10 % einer Phosphazenverbindung. Es handelt sich um teilaromatische Polyamide, die Schmelzpunkte liegen zwischen 280 und 340 °C. Füll- und Verstärkungsstoffe sowie weitere Additive können ebenfalls verwendet werden. Polyester werden nicht erwähnt.

Die DE-A-60011058 beschreibt flammhemmende aromatische Polyamide mit 100 Gew.-Teilen eines aromatischen Polyamidharzes, 0,1 - 100 Gew.-Teile einer vernetzten Phosphazenverbindung, 1 - 60 Gew.-Teile einer anorganischen, faserartigen Substanz und 1- 60 Gew.-Teile Magnesiumhydroxid.

Die JP-A-2007-138151 beschreibt flammwidrige Polyamide mit Phosphazenen. Phosphinate werden als weitere Flammschutzmittel erwähnt, in den Beispielen wird in Polyamid 66 Phosphazen mit Melamincyanurat und einem Phenolharz als Aschebildner kombiniert. Ohne PTFE-Zusatz wird kein V-0 erreicht. In Polyestern können Phenolharze aber wegen Verfärbungen und Polymerabbau nicht eingesetzt werden. Hinweise auf positive Effekte einer Kombination von Phosphazen und Phosphinat finden sich nicht.

Die DE-A-69907251 beschreibt flammhemmende Harzusammensetzungen aus 100 Gew.-Teilen eines thermoplastischen Harzes, 0,001 - 50 Gew.-Teilen eines thermotropen Flüssigkristallpolymers und 1 - 30 Gew.-Teile einer halogenfreien Phosphazenverbindung. Das thermoplastische Harz kann ein Polyester sein. Nachteilig an dem notwendigen Zusatz eines flüssigkristallinen Polymers ist der hohe Preis und die schwierige Verarbeitung derartiger Formmassen.

Werden die Phosphinate alleine oder in Kombination mit anderen Flammschutzmitteln in Polyestern eingesetzt, kommt es in der Regel zu einem gewissen Polymerabbau, der sich negativ auf die mechanischen Eigenschaften des Polymersystems auswirkt. Auch mit Phosphazenen allein oder in Kombination mit anderen Flammschutzmitteln können keine flammwidrigen Polyester mit guten mechanischen Eigenschaften erhalten werden. Nachteilig sind darüber hinaus unsichere UL 94 V-0 Einstufungen durch zu lange Nachbrennzeiten einzelner Probekörper, keine sichere GWIT 775 °C Einstufung bei dünnen Wandstärken (< 1,5 mm) und Bruchdehnungen unter 2 %, insbesondere bei Glas(faser)gehalten von 25 - 35 %.

Es wurde nun überraschenderweise gefunden, dass durch die Kombination von Phosphinaten mit Phosphazenen und gegebenenfalls weiteren

Flammschutzmitteln sowie Füll- und Verstärkungsstoffe und weiteren Additiven flammwidrige Polyestercompunds erzeugt werden können, die sich durch eine sichere UL 94 V-0 Einstufung, erhöhte Glühdrahtfestigkeit, verbesserte Mechanik, gute Einfärbbarkeit, gute Fließfähigkeit und verringerten Polymerabbau auszeichnen.

Unter Phosphazenen werden cyclische Phosphazene der allgemeinen Formel (I) 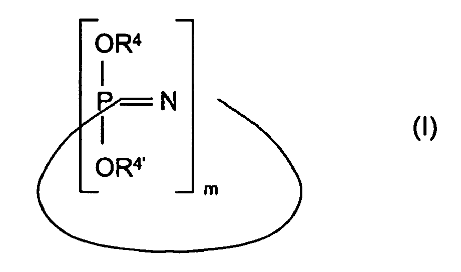 worin m eine ganze Zahl von 3 bis 25 ist und R⁴ und R^{4'} gleich oder verschieden sind und für C₁-C₂₀-Alkyl, C₆-C₃₀-Aryl, C₆-C₃₀-Arylalkyl oder C₆-C₃₀-Alkyl substituiertes Aryl stehen oder lineare Phosphazene der allgemeinen Formel (II) 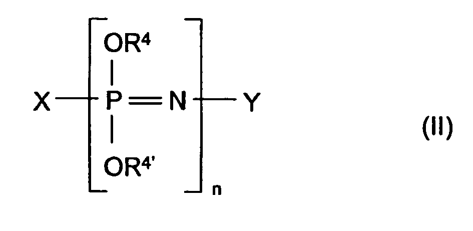 worin n 3 bis 1000 und X für -N = P(OPh)₃ oder -N = P(O)OPh und Y für -P(OPh)₄ oder -P(O)(OPh)₂ steht, verstanden.

Die Herstellung derartiger Phosphazene ist in der EP-A-0 945 478 beschrieben.

Besonders bevorzugt sind cyclische Phenoxyphosphazene der Formel P₃N₃C₃₆ (III) 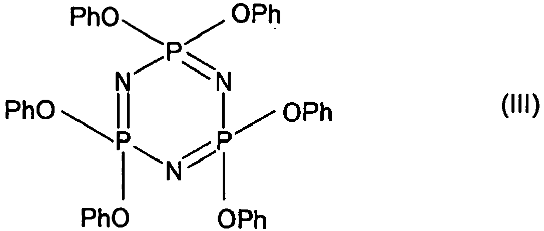 oder lineare Phenoxyphosphazene nach Formel (IV).

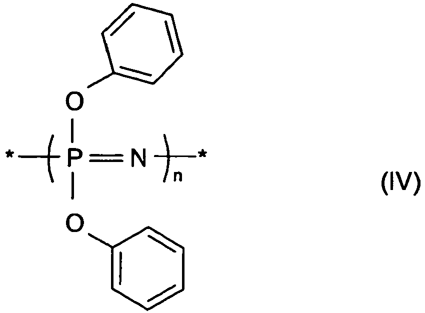

Die Phenylreste können gegebenenfalls substituiert sein. Phosphazene im Sinne der vorliegenden Anmeldung sind beschrieben in Mark, J.A., Allcock, H.R., West, R., "Inorganic Polymers", Prentice Hall International, 1992, pages 61 - 141.

Gegenstand der Erfindung sind daher flammwidrige Polyestercompounds, enthaltend als Komponente A 40 bis 89,9 Gew.-% thermoplastischen Polyester, als Komponente B 5 bis 25 Gew.-% Phosphinsäuresalz der Formel (V) und/oder Diphosphinsäuresalz der Formel (VI) und/oder deren Polymere, 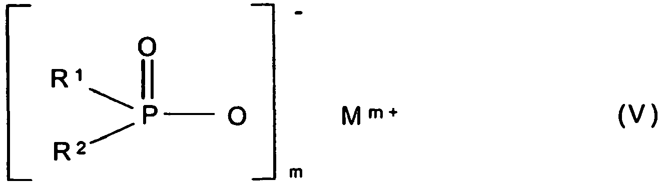 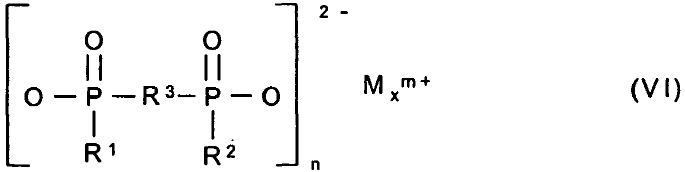 worin
- R¹, R²: gleich oder verschieden sind und H oder C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Fe, Zr, Ce, Bi, Sr, Mn, Li, Na, K und/oder eine protonierte Stickstoffbase;
- m: 1 bis 4; n 1 bis 4; x 1 bis 4 bedeuten,
und als Komponente C 5 bis 25 Gew. % eines Phosphazenes der allgemeinen Formel (I) oder (II) 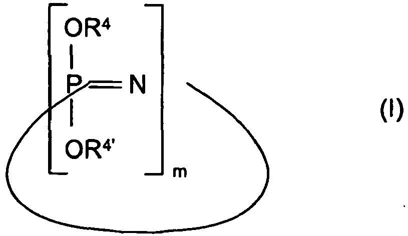 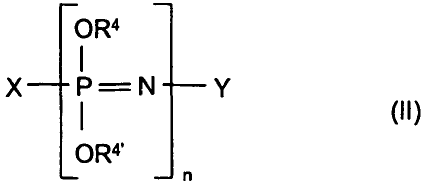 worin R⁴ und R^{4'} gleich oder verschieden sind und für C₁-C₂₀-Alkyl, C₆-C₃₀-Aryl, C₆-C₃₀-Arylalkyl oder C₆-C₃₀-Alkyl substituiertes Aryl stehen;
als Komponente D 0 bis 15 Gew.-% Umsetzungsprodukte von Melamin mit Phosphorsäure und/oder kondensierten Phosphorsäuren bzw. Umsetzungsprodukte von Kondensationsprodukten des Melamins mit Phosphorsäure und/oder kondensierten Phosphorsäuren und/oder sowie Gemische der genannten Produkte und/oder ein anderes stickstoffhaltiges Flammschutzmittel als die vorgenannten; als Komponente E 0 bis 45 Gew.-% Verstärkungsstoffe und als Komponente F 0,1 bis 3 Gew.-% weitere Additive, wobei die Summe der Gewichtskomponenten 100 Gew.-% ergibt.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen.

Bevorzugt sind flammwidrige Polyestercompounds, enthaltend 40 bis 74,9 Gew.-% Komponente A, 5 bis 25 Gew.-% Komponente B, 5 bis 15 Gew.-% Komponente C, 0 bis 10 Gew.-% Komponente D, 15 bis 35 Gew.-% Komponente E und 0,1 bis 2 Gew.-% Komponente F, wobei die Summe der Gewichtskomponenten 100 Gew.-% ergibt.

Besonders bevorzugt sind flammwidrige Polyestercompounds, enthaltend 40 bis 72,9 Gew.-% Komponente A, 5 bis 20 Gew.-% Komponente B, 5 bis 15 Gew.-% Komponente C, 2 bis 10 Gew.-% Komponente D, 15 bis 30 Gew.-% Komponente E und 0,1 bis 2 Gew.-% Komponente F, wobei die Summe der Gewichtskomponenten 100 Gew.-% ergibt.

Bevorzugt handelt es sich bei der Komponente D um Melaminphosphat, Dimelaminphosphat, Melaminpyrophosphat, Melaminpolyphosphate, Melampolyphosphate, Melempolyphosphate und/oder Melonpolyphosphate.

Bevorzugt handelt es sich bei der Komponente D um Melaminkondensationsprodukte wie Melam, Melem und/oder Melon.

Bevorzugt handelt es sich bei der Komponente D um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin.

Bevorzugt handelt es sich bei der Komponente D um Stickstoffverbindungen der Formeln (VII) bis (XII) oder Gemische davon 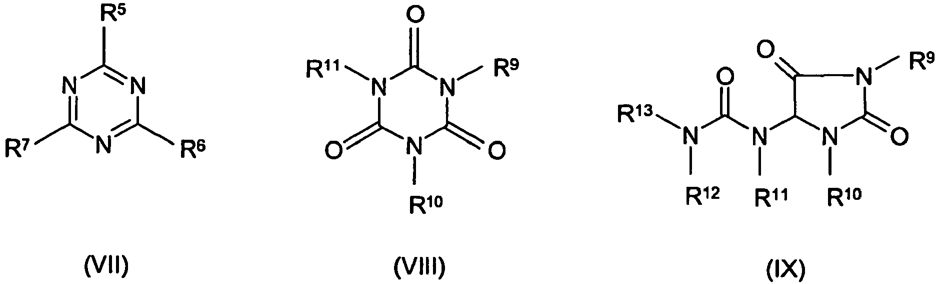 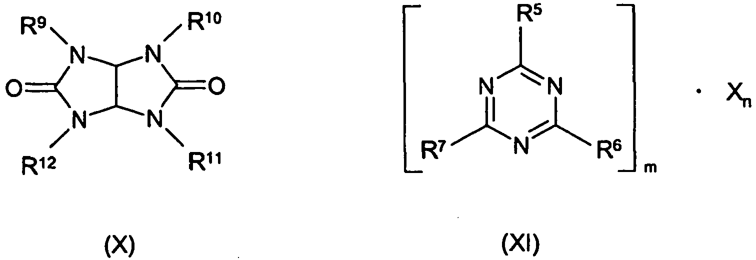 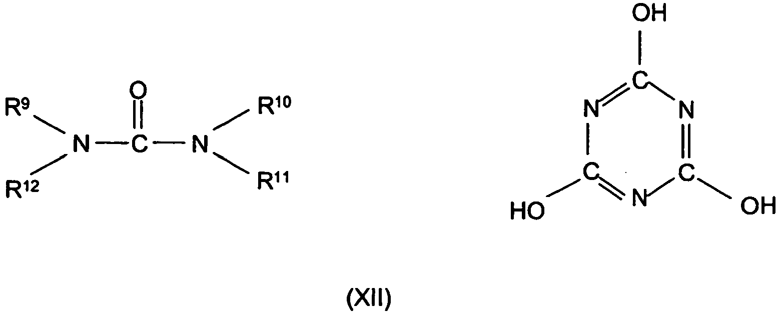 worin
- R⁵ bis R⁷: Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (VII) bilden können,
bedeuten;

Bevorzugt handelt es sich bei der Komponente E um mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat und/oder Bariumsulfat und/oder um Glasfasern.

Bevorzugt handelt es sich bei der Komponente F um Gleit- und/oder Entformungsmittel.

Bevorzugt handelt es sich bei den Gleit- und/oder Entformungsmitteln um langkettige Fettsäuren, deren Salze, deren Esterderivate und/oder Amidderivate, Montanwachse und/oder niedermolekulare Polyethylen- und/oder Polypropylenwachse.

Die Erfindung betrifft auch ein Verfahren zur Herstellung der erfindungsgemäßen flammwidrigen Polyestercompounds, dadurch gekennzeichnet, dass man die Komponenten A bis F in den genannten Gewichtsanteilen durch Schmelzextrusion vermischt.

Die Erfindung betrifft zudem Fasern, Folien und Formkörpern aus den flammwidrigen Polyestercompounds nach einem oder mehreren der Ansprüche 1 bis 12.

Die Erfindung betrifft die Verwendung der Fasern, Folien und Formkörper aus den erfindungsgemäßen flammwidrigen Polyestercompounds in Steckern, Schaltern, Kondensatoren, Isolationssystemen, Lampensockeln, Spulenkörpern, Gehäusen und Steuerungen sowie anderen Gegenständen.

Schließlich betrifft die Erfindung die Verwendung der Fasern, Folien und Formkörper aus den erfindungsgemäßen flammwidrigen Polyestercompounds im Haushalt, der Industrie, in Medizin, in Kraftfahrzeugen, in Flugzeugen, in Schiffen, in Raumschiffen sowie in anderen Fortbewegungsmitteln, in Büroausstattungen sowie in Gegenständen und Gebäuden die einen erhöhten Brandschutz erfordern.

Bevorzugt bedeutet M Magnesium, Calcium, Aluminium oder Zink, besonders bevorzugt Aluminium oder Zink.

Bevorzugt bedeutet m 2 oder 3; n 1 oder 3; x 1 oder 2.

Die thermoplastischen Polyester (Komponente A) sind ausgewählt aus der Gruppe der Polyalkylenterephthalate. Polyalkylenterephthalate im Sinne der Erfindung sind Reaktionsprodukte aus aromatischen Dicarbonsäuren oder ihren reaktionsfähigen Derivaten (z. B. Dimethylestern oder Anhydriden) und aliphatischen, cycloaliphatischen oder araliphatischen Diolen und Mischungen dieser Reaktionsprodukte.

Erfindungsgemäß bevorzugt einzusetzende Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, Seiten 695 - 710, Karl-Hanser-Verlag, München 1973).

Erfindungsgemäß bevorzugt einzusetzende Polyalkylenterephthalate enthalten mindestens 80 mol-%, vorzugsweise 90 mol-%, bezogen auf die Dicarbonsäure, Terephthalsäurereste.

Die erfindungsgemäß bevorzugt einzusetzenden Polyalkylenterephthalate können neben Terephthalsäureresten bis zu 20 mol-% Reste anderer aromatischer Dicarbonsäuren mit 8 bis 14 C-Atomen oder Reste aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die erfindungsgemäß einzusetzenden Polyalkylenterephthalate können durch Einbau relativ kleiner Mengen 3- oder 4-wertiger Alkohole oder 3- oder 4-basischer Carbonsäuren, wie sie z. B. in der DE-A-19 00 270 beschrieben sind, verzweigt werden. Beispiele für bevorzugte Verzweigungsmittel sind Trimesinsäure, Trimellitsäure, Trimethylolethan und -propan und Pentaerythrit. Erfindungsgemäß besonders bevorzugt sind Polyalkylenterephthalate, die allein aus Terephthalsäure und deren reaktionsfähigen Derivaten (z. B. deren Dialkylestern) und Ethylenglykol und/oder Propandiol-1,3 und/oder Butandiol-1,4 hergestellt werden (Polyethylen- und Polytrimethylen- und Polybutylenterephthalat) und Mischungen dieser Polyalkylenterephthalate.

Bevorzugte Polybutylenterephthalate enthalten mindestens 80 mol-%, vorzugsweise 90 mol-%, bezogen auf die Dicarbonsäure, Terephthalsäurereste und mindestens 80 mol-%, vorzugsweise mindestens 90 mol-%, bezogen auf die Diolkomponente Butandiol-1,4-reste.

Die bevorzugten Polybutylenterephthalate können des Weiteren neben Butandiol-1,4-resten bis zu 20 mol-% anderer aliphatischer Diole mit 2 bis 12 C-Atomen oder cycloaliphatischer Diole mit 6 bis 21 C-Atomen enthalten, z. B. Reste von Ethylenglycol, Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5,1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-[beta]-hydroxyethoxyphenyl)-propan und 2,2-bis-(4-hydroxypropoxyphenyl)-propan (DE-A-24 07 674, DE-A-24 07 776, DE-A-27 15 932).

Erfindungsgemäß bevorzugt einzusetzende Polyalkylenterephthalate sind auch Copolyester, die aus mindestens zwei der oben genannten Säurekomponenten und/oder aus mindestens zwei der oben genannten Alkoholkomponenten und/oder Butandiol-1,4 hergestellt werden. Besonders bevorzugte Copolyester sind Poly-(ethylenglykol/butandiol-1,4)-terephthalate.

Die als Komponente A erfindungsgemäß einzusetzenden thermoplastischen Polyester können auch im Gemisch mit anderen Polyestern und/oder weiteren Polymeren eingesetzt werden.

Als Komponente C (Phosphazene) kommen bevorzugt die in Mark, J.A., Allcock, H.R., West, R., "Inorganic Polymers", Prentice Hall International, 1992, Seiten 61-141 beschriebenen Verbindungen in Frage.

Bevorzugt sind halogenfreie Phosphazene. Bevorzugt sind zyklische Phosphazene dargestellt durch die Formel (I), worin m eine ganze Zahl von 3 bis 25 ist und R⁴ und R^{4'} entweder gleich oder verschieden sind und 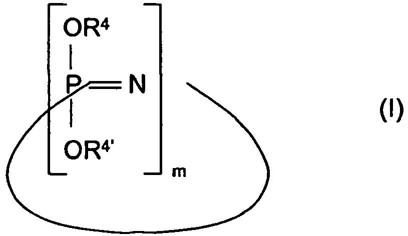 oder gradkettige Phosphazene dargestellt durch die Formel (II) 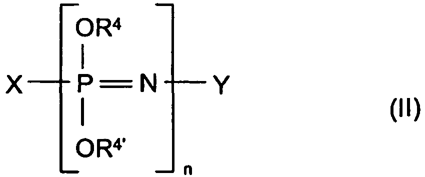 worin n eine ganze Zahl von 3 bis 1000 ist, R4 und R4' ebenfalls für C₁-C₂₀ Alkyl, C₆-C₃₀ Aryl, C₆-C₃₀ Arylalkyl oder C₆-C₃₀ Alkyl substituiertes Aryl stehen und X -N = P(OR⁴)₃ oder -N = P(O)OR⁴ und Y -P(OR⁴)₄ oder -P(O)(OR⁴)₂ bedeutet, oder ein querverbundenes Phosphazen, worin mindestens eine der vorangehenden Phosphazenen (I) und (II) mit mindestens einer querverbindenen Gruppe querverbunden wird. Die querverbindene Gruppe besteht aus einer o-Phenylen Gruppe, einer m-Phenylen Gruppe, einer p-Phenylen Gruppe, einer Biphenylgruppe oder einer Gruppe dargestellt durch die Formel (XIII) 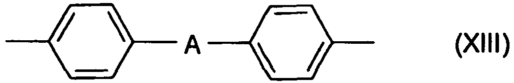 worin A eine Gruppe -SO₂, eine Gruppe -S, eine -O oder Gruppe einer Gruppe -C(CH₃)₂, wobei jede der gesagten querverbindenen Gruppen zwischen den zwei Sauerstoffatomen angeordnet ist, die nach der Entfernung der Gruppe R⁴ hinterlassen werden, wobei die Anzahl der R⁴ Gruppen im querverbundenen Phosphazen 50 bis 99,9 %, basierend auf der Gesamtzahl von R⁴ Gruppen in gesagtem Phosphazen vor dem Querverbinden ist.

Die vorangehenden Typen des Halogen-freien Phosphazens können entweder allein oder in Kombination verwendet werden.

Spezifische Beispiele des zyklischen Phosphazens und des gradkettigen Phosphazens umfassen ein Gemisch von Phosphazenverbindungen, in denen eine Phenoxygruppe und/oder eine Alkoxygruppe eingeführt wurde in einer Mischung der zyklischen und gradkettigen Chlorophosphazene, z. B. Hexachlorocyclotriphosphazene, Octachlorocyclotetraphosphazene und dergleichen. Die Chlorphosphazene werden hergestellt, indem Ammoniumchlorid und Phosphorpentachlorid bei 120 - 130 °C miteinander reagieren.

Spezifischen Beispiele des querverbundenen Phosphazens sind Phenoxyphosphazene, mit einer durch 4,4'- Sulfonyldiphenylene (Bisphenol-S Rest) querverbundenen Struktur, das Phenoxyphosphazene, das mit einer 2,2-(4.4'-diphenylene)isopropyliden Gruppe querverbundene Struktur, das Phenoxyphosphazen, das mit einer 4,4'-Diphenylengruppe querverbundene Struktur hat, etc.

Beispiele für bevorzugten Phosphazene sind Hexaphenoxycyclotriphosphazene, Octaphenoxycyclotetraphosphazene, Cyclopentaphosphazene und ähnliche Cyclophosphazene die mit Phenoxygruppen substituiert sind sowie gradkettige Phosphazene, die durch Phenoxygruppen substituiert sind.

Besonders bevorzugt handelt es sich bei der Komponente D um Melamincyanurat.

Unter den Umsetzungsprodukten mit Phosphorsäure oder kondensierten Phosphorsäuren versteht man Verbindungen, die durch Umsetzung von Melamin oder den kondensierten Melaminverbindungen, wie Melam, Melem oder Melon etc., mit Phosphorsäure entstehen. Beispiele hierfür sind Dimelaminphosphat, Dimelaminpyrophosphat, Melaminphosphat, Melaminpyrophosphat, Melaminpolyphosphat, Melampolyphosphat, Melonpolyphosphat und Melempolyphosphat bzw. gemischte Polysalze, wie sie z. B. in der WO-A-98/39306 beschrieben sind.

Besonders bevorzugt handelt es sich bei der Komponente D um Melaminpolyphosphat.

Besonders bevorzugt werden erfindungsgemäß mineralische teilchenförmige Füllstoffe auf der Basis von Talk, Wollastonit, Kaolin und/oder Glasfasern eingesetzt.

Insbesondere für Anwendungen, in denen Isotropie bei der Dimensionsstabilität und eine hohe thermische Dimensionsstabilität gefordert werden, wie beispielsweise in Kfz-Anwendungen für Karosserieaußenteile, werden bevorzugt mineralische Füllstoffe eingesetzt, insbesondere Talk, Wollastonit oder Kaolin.

Besonders bevorzugt handelt es sich bei der Komponente E um Glasfasern.

Besonders bevorzugt können ferner auch nadelförmige mineralische Füllstoffe als Komponente E eingesetzt werden. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser-Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen geeigneten nadelförmigen Mineralien liegt bevorzugt bei kleiner 20 Microm, besonders bevorzugt bei kleiner 15 Microm, insbesondere bevorzugt bei kleiner 10 Microm.

Der Füllstoff und/oder Verstärkungsstoff kann gegebenenfalls oberflächenmodifiziert sein, beispielsweise mit einem Haftvermittler bzw. Haftvermittlersystem z. B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die als Komponente E erfindungsgemäß besonders bevorzugt einzusetzenden Glasfasern, die bevorzugt einen Faserdurchmesser zwischen 7 und 18 Microm, bevorzugt zwischen 9 und 15 Microm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z. B. auf Silanbasis ausgerüstet sein.

Bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen in Mengen von 0,05 bis 2 Gew.-%, vorzugsweise 0,25 bis 1,5 Gew.-% und insbesondere 0,5 bis 1 Gew.-% bezogen auf den mineralischen Füllstoff, zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d₉₀- bzw. d₅₀-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

In einer weiteren alternativen bevorzugten Ausführungsform können die Formmassen zusätzlich zu den Komponenten A bis E als Komponente F mindestens ein Gleit- und Entformungsmittel enthalten. Hierzu eignen sich beispielsweise langkettige Fettsäuren (z. B. Stearinsäure oder Behensäure), deren Salze (z. B. Ca- oder Zn-Stearat) sowie deren Esterderivate oder Amidderivate (z. B. Ethylen-bis-stearylamid), Montanwachse (Mischungen aus geradkettigen, gesättigten Carbonsäuren mit Kettenlängen von 28 bis 32 C-Atomen) sowie niedermolekulare Polyethylen- bzw. Polypropylenwachse. Erfindungsgemäß werden bevorzugt Gleit- und/oder Entformungsmittel aus der Gruppe der niedermolekularen Polyethylenwachse sowie der Ester gesättigter oder ungesättigter aliphatischer Carbonsäuren mit 8 bis 40 C-Atomen mit aliphatischen gesättigten Alkoholen mit 2 bis 40 C-Atomen eingesetzt, wobei Pentaerythrittetrastearat (PETS) ganz besonders bevorzugt ist.

In einer weiteren alternativen bevorzugten Ausführungsform können die Formmassen zusätzlich zu den Komponenten A bis E noch weitere Additive enthalten. Übliche Additive sind z. B. Stabilisatoren (zum Beispiel UV-Stabilisatoren, Thermostabilisatoren, Gammastrahlenstabilisatoren, Hydrolysestabilisatoren), Antistatika, weitere Flammschutzmittel, Emulgatoren, Nukleierungsmittel, Weichmacher, Verarbeitungshilfsmittel, Schlagzähmodifikatoren, Farbstoffe und Pigmente. Die Additive können alleine oder in Mischung bzw. in Form von Masterbatchen eingesetzt werden oder vorweg der Komponente A in der Schmelze zugemischt oder auf deren Oberfläche aufgebracht werden.

Als Stabilisatoren können zum Beispiel sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als geeignete UV-Stabilisatoren seien verschiedene substituierte Resorcine, Salicylate, Benzotriazole und Benzophenone genannt.

Im Falle von Schlagzähmodifikatoren (Elastomermodifikatoren, Modifikatoren) handelt es sich ganz allgemein um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Es können anorganische Pigmente, wie Titandioxid, Ultramarinblau, Eisenoxid, Zinksulfid und Ruß, weiterhin organische Pigmente, wie Phthalocyanine, Chinacridone, Perylene sowie Farbstoffe, wie Nigrosin und Anthrachinone als Farbmittel sowie andere Farbmittel zugesetzt werden. Im Rahmen der vorliegenden Erfindung ist die Verwendung von Ruß bevorzugt.

Als Nukleierungsmittel können z. B. Natrium- oder Calciumphenylphosphinat, Aluminiumoxid oder Siliziumdioxid sowie bevorzugt Talkum eingesetzt werden.

Als Verarbeitungshilfsmittel können zum Beispiel Copolymerisate aus mindestens einem α-Olefin mit mindestens einem Methacrylsäurester oder Acrylsäureester eines aliphatischen Alkohols eingesetzt werden. Bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 4 bis 20 C-Atomen enthält. Besonders bevorzugt ist Acrylsäurebutylester und Acrylsäure-(2-ethyl)-hexylester.

Als Beispiele für Weichmacher seien Phthalsäuredioctylester, Phthalsäuredibenzylester, Phthalsäurebutylbenzylester, Kohlenwasserstofföle und N-(n-Butyl)benzolsulfonamid genannt.

Bevorzugt enthalten die erfindungsgemäßen flammwidrigen Polyestercompounds weiterhin Carbodiimide.

Bevorzugt enthalten die flammwidrigen Polyestercompounds mehr als einen thermoplastischen Polyester. Besonders bevorzugt enthalten die flammwidrigen Polyestercompounds PBT und PET in Abmischungen.

Bevorzugt enthalten die flammwidrigen Polyestercompounds auch Polycarbonate.

Im Folgenden umfasst der Begriff "Phosphinsäuresalz" Salze der Phosphin- und Diphosphinsäuren und deren Polymere.

Die Phosphinsäuresalze, die in wässrigem Medium hergestellt werden, sind im Wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise:
Dimethylphosphinsäure, Ethylmethylphosphinsäure, Diethylphosphinsäure, Methyl-n-propylphosphinsäure, Methandi(methylphosphinsäure), Benzol-1,4-(dimethylphosphinsäure), Methylphenylphosphinsäure und
Diphenylphosphinsäure.

Die Salze der Phosphinsäuren gemäß der vorliegenden Erfindung können nach bekannten Methoden hergestellt werden, wie sie beispielsweise in der EP-A-0 699 708 näher beschrieben sind.

Die vorgenannten Phosphinsäuresalze können für die erfindungsgemäßen Polyestercompounds je nach Art des verwendeten Polymeren und der gewünschten Eigenschaften in verschiedener physikalischer Form angewendet werden. So können die Phosphinsäuresalze z. B. zur Erzielung einer besseren Dispersion im Polymeren zu einer feinteiligen Form vermahlen werden. Es können auch Gemische verschiedener Phosphinsäuresalze eingesetzt werden.

Die eingesetzten Phosphinsäuresalze gemäß der Erfindung sind thermisch stabil, zersetzen die Polymere weder bei der Verarbeitung noch beeinflussen sie den Herstellprozess der Kunststoff-Formmasse. Die Phosphinsäuresalze sind unter den üblichen Herstellungs- und Verarbeitungsbedingungen für Polyester nicht flüchtig.

Die Komponenten B, C und D können in thermoplastische Polyester eingearbeitet werden, indem z. B. alle Bestandteile als Pulver und/oder Granulat in einem Mischer vorgemischt und anschließend in einem Compoundieraggregat (z. B. einem Doppelschneckenextruder) in der Polymerschmelze homogenisiert werden. Die Schmelze wird üblicherweise als Strang abgezogen, gekühlt und granuliert. Die Komponenten C sowie D können auch separat über eine Dosieranlage direkt in das Compoundieraggregat eingebracht werden.

Es ist ebenso möglich, die flammhemmenden Zusätze B, C und D einem fertigen Polymergranulat bzw. -pulver beizumischen und die Mischung direkt auf einer Spritzgußmaschine zu Formteilen zu verarbeiten.

Bei Polyestern beispielsweise können die flammhemmenden Zusätze B, C und D auch bereits während der Polykondensation in die Polyestermasse gegeben werden.

Die Komponenten E und F können ebenfalls an allen vorgenannten Stellen zugegeben werden.

Die flammwidrigen Polyestercompounds eignen sich zur Herstellung von Formkörpern, Filmen, Fäden und Fasern, z. B. durch Spritzgießen, Extrudieren oder Verpressen.

### Beispiele

### 1. Eingesetzte Komponenten

Handelsübliche Polyester (Granulate), Komponente A:
Polybutylenterephthalat (PBT): Ultradur^{®} 4500 (Fa. BASF, D)

### Komponente B:

Aluminiumsalz der Diethylphosphinsäure, im Folgenden als DEPAL bezeichnet. Zinksalz der Diethylphosphinsäure, im Folgenden als DEPZN bezeichnet.

### Komponente C:

Phosphazen^{®} SPB 100, Fa. Otsuka Chemical Co., Japan
Phosphazen^{®} Rabitle FP 110, Fushimi Pharmaceuticals, Japan

### Komponente D:

Melapur^{®} MC (Melamincyanurat), Fa. Ciba Specialty Chemicals, CH
Melapur^{®} 200/70 (Melaminpolyphosphat = MPP), Fa. Ciba Specialty Chemicals, CH
Delacal^{®} M350 (Melem), Fa. Delamin, UK

### Komponente E:

Vetrotex^{®} EC 10 P 952 (Glasfasern), Fa. Vetrotex Reinforcement, D

### Komponente F:

Gleitmittel: Licolub^{®} FA1, Montanwachs, Fa. Clariant, CH

### 2. Herstellung, Verarbeitung und Prüfung von flammwidrigen Polyestercompounds

Die Flammschutzkomponenten wurden in dem in den Tabellen angegebenen Verhältnis mit dem Polymergranulat und evtl. Additiven vermischt und auf einem Doppelschnecken-Extruder (Typ Leistritz ZSE 27 HP-44D) bei Temperaturen von 240 bis 280 °C eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320C/KT) bei Massetemperaturen von 260 bis 280 °C zu Prüfkörpern verarbeitet. Die Flammwidrigkeit der Formmassen wurde nach der Methode UL94V (Underwriters Laboratories Inc. Standard of Safety, "Test for Flammability of Plastic Materials for Parts in Devices and Appliances", Seite 14 bis Seite 18 Northbrook 1998) bestimmt.

Nach UL 94 ergeben sich folgende Brandklassen:
V-0: kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende
V-1: kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0 V-2: Zündung der Watte durch brennendes Abtropfen, übrige Kriterien wie bei V-1

Nicht klassifizierbar (nkl): erfüllt nicht die Brandklasse V-2.

Die Glühdrahtbeständigkeit wurde anhand der Glühdrahtprüfung GWFI (Glow-Wire Flammability-Index) nach IEC 60695-2-12 sowie an der Glühdrahtentzündlichkeitsprüfung GWIT (Glow-Wire-Ignition-Temperature) nach IEC 60695-2-13 bestimmt. Bei der GWFI-Prüfung wird an 3 Prüfkörpern (beispielsweise an Platten der Geometrie 60 X 60 X 1,5 mm) mit Hilfe eines glühenden Drahtes bei Temperaturen zwischen 550 und 960 °C die maximale Temperatur ermittelt, bei der eine Nachbrennzeit von 30 Sekunden nicht überschritten wird und die Probe nicht brennend abtropft. Bei der GWIT-Prüfung wird bei einer vergleichbaren Messprozedur die Glühdrahtentzündungstemperatur angegeben, die 25K (30K zwischen 900 °C und 960 °C höher ist als die maximale Glühdrahttemperatur, die in 3 aufeinander folgenden Tests auch während der Einwirkzeit des Glühdrahtes nicht zur Entzündung führt. Als Entzündung gilt dabei eine Flamme mit Brennzeit > = 5 sec.

**Tabelle 1: Vergleichsbeispiele: PBT GF 30 mit DEPAL, Phosphazen und Melaminpolyphosphat jeweils allein**

| Beispiel | | V1 | V2 | V3 |
|---|---|---|---|---|
| PBT | (Gew.-%) | 49,7 | 49,7 | 49,7 |
| Glasfasern | (Gew.-%) | 30 | 30 | 30 |
| DEPAL | (Gew.-%) | 20 | | |
| Phosphazen SPB 100 | (Gew.-%) | | 20 | |
| Melaminpolyphosphat | (Gew.-%) | | | 20 |
| Gleitmittel | (Gew.-%) | 0,3 | 0,3 | 0,3 |
| UL94 (0,8 mm) | | V0 | V2 | V2 |
| GWIT (0,75 mm) | (°C) | 750 | 725 | 750 |
| Reißdehnung | (Gew.-%) | 1,9 | 2,6 | 2,0 |
| SZ bei RT | (kJ/m²) | 36 | 43 | 38 |
| KSZ bei RT | (kJ/m²) | 6,2 | 5,6 | 6,4 |

| | | | | |
|---|---|---|---|---|
| SZ = Schlagzähigkeit; KSZ = Kerbschlagzähigkeit | | | | |

**Tabelle 2: Vergleichsbeispiele: PBT GF 30 mit DEPAL + MPP bzw. Phosphazen + MPP**

| Beispiel | | V4 | V5 | V6 |
|---|---|---|---|---|
| PBT | (Gew.-%) | 49,7 | 49,7 | 49,7 |
| Glasfasern | (Gew.-%) | 30 | 30 | 30 |
| DEPAL | (Gew.-%) | 13,3 | | |
| Phosphazen SPB 100 | (Gew.-%) | | 13,3 | 10 |
| Melaminpolyphosphat | (Gew.-%) | 6,7 | 6,7 | 10 |
| Gleitmittel | (Gew.-%) | 0,3 | 0,3 | 0,3 |
| UL94 (0,8 mm) | | V0 | V2 | V2 |
| GWIT (1 mm) | (°C) | 750 | 750 | 750 |
| Reißdehnung | (Gew.-%) | 1,9 | 2,6 | 2,6 |
| SZ bei RT | (kJ/m²) | 37 | 43 | 41 |
| KSZ bei RT | (kJ/m²) | 6,2 | 6,4 | 7,0 |

**Tabelle 3: Erfindungsgemäße Kombination von DEPAL mit Phosphazen und Melaminpolyphosphat**

| Beispiel | | B1 | B2 | B3 |
|---|---|---|---|---|
| PBT | (Gew.-%) | 49,7 | 49,7 | 49,7 |
| Glasfasern | (Gew.-%) | 30 | 30 | 30 |
| DEPAL | (Gew.-%) | 13,3 | 10 | 13,3 |
| Phosphazen SPB 100 | (Gew.-%) | 6,7 | 3,3 | 3,3 |
| Melaminpolyphosphat | (Gew.-%) | | 6,7 | 3,4 |
| Gleitmittel | (Gew.-%) | 0,3 | 0,3 | 0,3 |
| UL94 (0,8 mm) | | V1 | V0 | V0 |
| GW IT (1 mm) | (°C) | 750 | 775 | 775 |
| Reißdehnung | (Gew.-%) | 2,9 | 2,5 | 2,5 |
| SZ bei RT | (kJ/m²) | 42 | 39 | 41 |
| KSZ bei RT | (kJ/m²) | 7,0 | 6,8 | 6,7 |

**Tabelle 4: Erfindungsgemäße Kombination von DEPAL mit Phosphazen und Melaminpolyphosphat**

| Beispiel | | B4 | B5 | B6 |
|---|---|---|---|---|
| PBT | (Gew.-%) | 49,7 | 49,7 | 49,7 |
| Glasfasern | (Gew.-%) | 30 | 30 | 30 |
| DEPAL | (Gew.-%) | 13,3 | 12 | |
| DEPZN | | | | 12 |
| Phosphazen Rabitle FP110 | (Gew.-%) | 3,3 | 5 | 5 |
| Melaminpolyphosphat | (Gew.-%) | 3,4 | 3 | 3 |
| Gleitmittel | (Gew.-%) | 0,3 | 0,3 | 0,3 |
| UL94 (0,8 mm) | | V0 | V0 | V0 |
| GWIT (1 mm) | (°C) | 750 | 775 | 775 |
| Reißdehnung | (Gew.-%) | 2,6 | 2,6 | 2,9 |
| SZ bei RT | (kJ/m²) | 42 | 41 | 43 |
| KSZ bei RT | (kJ/m²) | 7 | 7,4 | 7,4 |

**Tabelle 5: Erfindungsgemäße Kombination von DEPAL mit Phosphazen und Melamincyanurat bzw. Melem**

| Beispiel | | B7 | B8 | B9 |
|---|---|---|---|---|
| PBT | (Gew.-%) | 49,7 | 49,7 | 49,7 |
| Glasfasern | (Gew.-%) | 30 | 30 | 30 |
| DEPAL | (Gew.-%) | 13,3 | 12 | 12 |
| Phosphazen Rabitle FP110 | | 3,3 | 5 | 3 |
| Melem | (Gew.-%) | | | 5 |
| Melamincyanurat | (Gew.-%) | 3,4 | 3 | |
| Gleitmittel | (Gew.-%) | 0,3 | 0,3 | 0,3 |
| UL94 (0,8 mm) | | V0 | V0 | V0 |
| GWIT (1 mm) | (°C) | 775 | 775 | 775 |
| Reißdehnung | (Gew.-%) | 2,4 | 2,5 | 2,6 |
| SZ bei RT | (kJ/m²) | 42 | 41 | 43 |
| KSZ bei RT | (kJ/m²) | 7 | 7,4 | 7,4 |

Aus den Vergleichsbeispielen V1-V6 geht hervor, dass es durch die alleinige Verwendung von DEPAL, Phosphazen oder Melaminpolyphosphat und durch die Kombination von DEPAL mit Melaminpolyphosphat sowie der Kombination von Phosphazen mit Meleminpolyphosphat nicht möglich ist, UL 94 V-0, GWIT 775 °C und eine Reißdehnung von größer 2 % gleichzeitig zu erreichen.

Durch die erfindungsgemäße Kombination von DEPAL oder DEPZN mit Phosphazen und ggf. mit Melaminpolyphosphat, Melamincyanurat oder Melem wird eine Reißdehnung von größer als 2 %, eine sichere UL 94 V-0 Einstufung und ein GWIT von 775 °C erreicht.

Die erfindungsgemäßen flammwidrigen Polyester Compounds zeichnen sich zudem durch einen hohen Weißgrad (Yellowness Index < 20 und L-Wert größer 95), gute Verarbeitbarkeit und keine Ausblühungen aus.

## Patentansprüche

1. Flammwidrige Polyestercompounds, enthaltend als Komponente A 40 bis 89,9 Gew.-% thermoplastischen Polyester, als Komponente B 5 bis 25 Gew.-% Phosphinsäuresalz der Formel (V) und/oder Diphosphinsäuresalz der Formel (VI) und/oder deren Polymere, 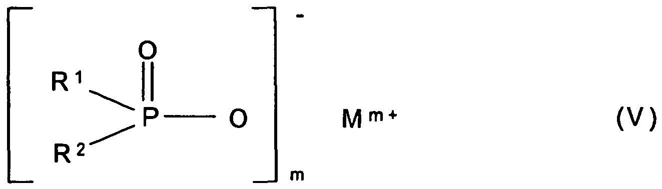 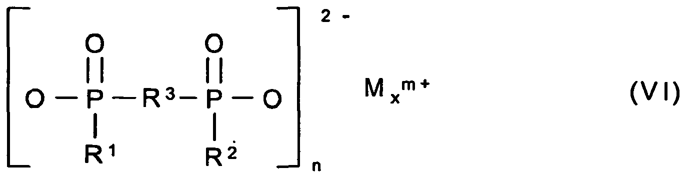 worin
R¹, R² gleich oder verschieden sind und H oder C₁-C₆-Alkyl, linear oder verzweigt und/oder Aryl;
R³ C₁-C₁₀-Alkylen, linear oder verzweigt, C₆-C₁₀-Arylen, -Alkylarylen oder Arylalkylen;
M Mg, Ca, Al, Sb, Sn, Ge, Ti, Fe, Zr, Ce, Bi, Sr, Mn, Li, Na, K und/oder eine protonierte Stickstoffbase;
m 1 bis 4; n 1 bis 4; x 1 bis 4 bedeuten,
und als Komponente C 5 bis 25 Gew. % eines Phosphazenes der allgemeinen Formel (I) oder (II) 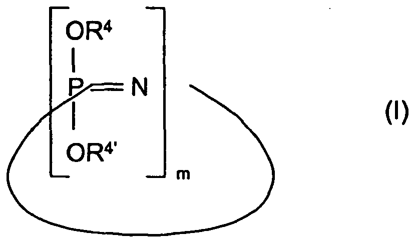 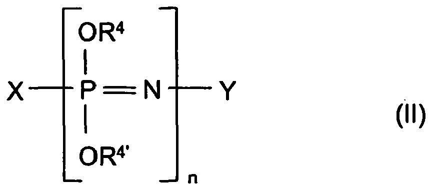 worin R⁴ und R^{4'} gleich oder verschieden sind und für C₁-C₂₀-Alkyl, C₆-C₃₀-Aryl, C₆-C₃₀-Arylalkyl oder C₆-C₃₀-Alkyl substituiertes Aryl stehen;
als Komponente D 0 bis 15 Gew.-% Umsetzungsprodukte von Melamin mit Phosphorsäure und/oder kondensierten Phosphorsäuren bzw. Umsetzungsprodukte von Kondensationsprodukten des Melamins mit Phosphorsäure und/oder kondensierten Phosphorsäuren und/oder sowie Gemische der genannten Produkte und/oder ein anderes stickstoffhaltiges Flammschutzmittel als die vorgenannten; als Komponente E 0 bis 45 Gew.-% Verstärkungsstoffe und als Komponente F 0,1 bis 3 Gew.-% weitere Additive, wobei die Summe der Gewichtskomponenten 100 Gew.-% ergibt.

2. Flammwidrige Polyestercompounds nach Anspruch 1, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

3. Flammwidrige Polyestercompounds nach Anspruch 1 oder 2, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen bedeutet.

4. Flammwidrige Polyestercompounds nach einem oder mehreren der der Ansprüche 1 bis 3, enthaltend 40 bis 74,9 Gew.-% an Komponente A, 5 bis 25 Gew.-% an Komponente B, 5 bis 15 Gew.-% an Komponente C, 0 bis 10 Gew.-% an Komponente D, 15 bis 35 Gew.-% an Komponente E und 0,1 bis 2 Gew.-% an Komponente F, wobei die Summe der Gewichtskomponenten 100 Gew.-% ergibt.

5. Flammwidrige Polyestercompounds nach einem oder mehreren der Ansprüche 1 bis 3, enthaltend 40 bis 72,9 Gew.-% an Komponente A, 5 bis 20 Gew.-% an Komponente B, 5 bis 15 Gew.-% an Komponente C, 2 bis 10 Gew.-% an Komponente D, 15 bis 30 Gew.-% an Komponente E und 0,1 bis 2 Gew.-% an Komponente F, wobei die Summe der Gewichtskomponenten 100 Gew.-% ergibt.

6. Flammwidrige Polyestercompounds nach einem oder mehreren der Ansprüche 1 bis 5, **dadurch gekennzeichnet, dass** es sich bei den Phospharenen um Phenoxyphosphazene handelt.

7. Flammwidrige Polyestercompounds nach einem oder mehreren der Ansprüche 1 bis 6, **dadurch gekennzeichnet, dass** es sich bei der Komponente D um Melaminphosphat, Dimelaminphosphat, Melaminpyrophosphat, Melaminpolyphosphate, Melampolyphosphate, Melempolyphosphate und/oder Melonpolyphosphate und/oder um Melaminkondensationsprodukte wie Melam, Metern und/oder Melon handelt.

8. Flammwidrige Polyestercompounds nach einem oder mehreren der Ansprüche 1 bis 6, **dadurch gekennzeichnet, dass** es sich bei der Komponente D um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin handelt

9. Flammwidrige Polyestercompounds nach einem oder mehreren der Ansprüche 1 bis 6, **dadurch gekennzeichnet, dass** es sich bei der Komponente D um Stickstoffverbindungen der Formeln (VII) bis (XII) oder Gemische davon 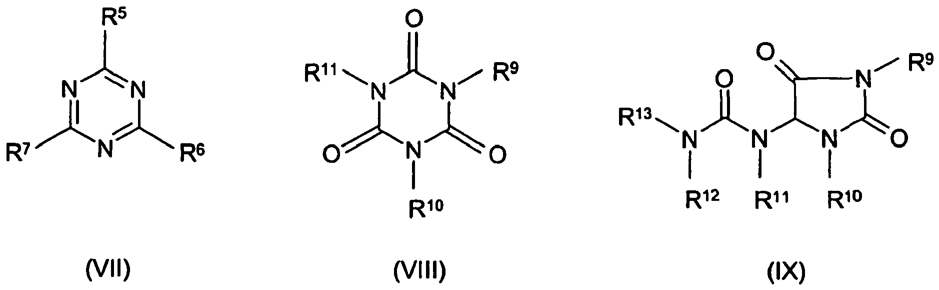 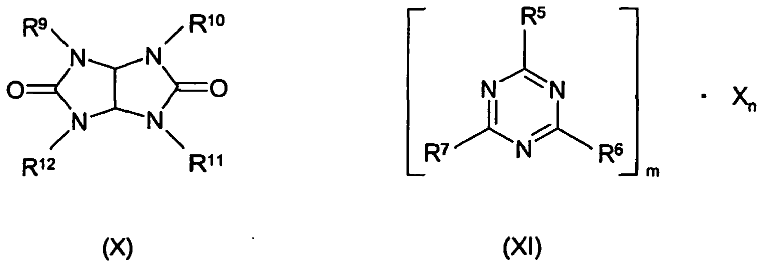 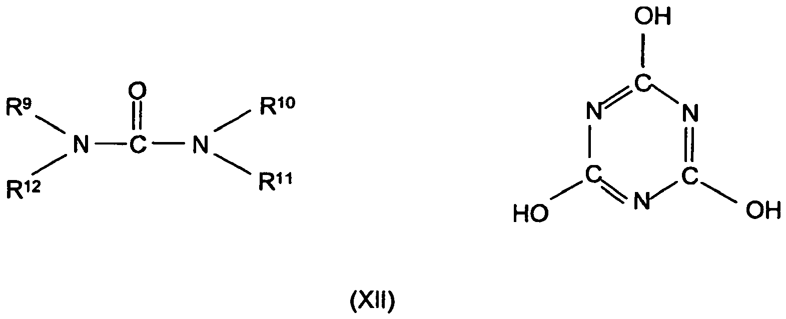 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (VII) bilden können, bedeuten, handelt.

10. Flammwidrige Polyestercompounds nach einem oder mehreren der Ansprüche 1 bis 9, **dadurch gekennzeichnet, dass** es sich bei der Komponente E um mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat und/oder Bariumsulfat und/oder Glasfasern handelt.

11. Flammwidrige Polyestercompounds nach einem oder mehreren der Ansprüche 1 bis 10, **dadurch gekennzeichnet, dass** es sich bei der Komponente F um Gleit- und/oder Entformungsmittel handelt.

12. Flammwidrige Polyestercompounds nach Anspruch 11, **dadurch gekennzeichnet, dass** es sich bei den Gleit- und/oder Entformungsmitteln um langkettige Fettsäuren, deren Salze, deren Esterderivate und/oder Amidderivate, Montanwachse und/oder niedermolekulare Polyethylen- und/oder Polypropylenwachse handelt.

13. Verfahren zur Herstellung von flammwidrigen Polyestercompounds, **dadurch gekennzeichnet, dass** man die Komponenten A bis F in den genannten Gewichtsanteilen durch Schmelzextrusion vermischt.

14. Fasern, Folien, Formkörper und Formteile aus flammwidrigen Polyestercompounds nach einem oder mehreren der Ansprüche 1 bis 12.

15. Verwendung von Fasern, Folien und Formkörper aus flammwidrigen Polyestercompounds nach einem oder mehreren der Ansprüche 1 bis 12 in Steckern, Schaltern, Kondensatoren, Isolationssystemen, Lampensockeln, Spulenkörpern, Gehäusen, Steuerungen und anderen Gegenständen.

16. Verwendung von Fasern, Folien, Formkörpern und Formteilen flammwidrigen Polyestercompounds nach einem oder mehreren der Ansprüche 1 bis 12 aus flammwidrigen Polyestercompounds nach einem oder mehreren der Ansprüche 1 bis 12 im Haushalt, in der Industrie, in der Medizin, in Kraftfahrzeugen, in Flugzeugen, in Schiffen, in Raumschiffen sowie in anderen Fortbewegungsmitteln, in Büroausstattungen sowie in weiteren Gegenständen und Gebäuden.

## Claims

1. A flame-retardant compounded polyester material, comprising, as component A, from 40 to 89.9% by weight of thermoplastic polyester, as component B, from 5 to 25% by weight of phosphinic salt of the formula (V) and/or diphosphinic salt of the formula (VI), and/or polymers of these 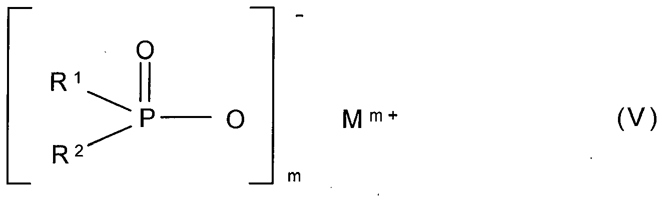 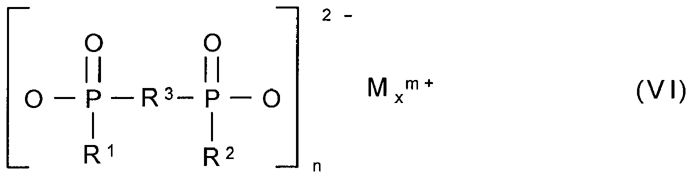 in which
R¹ and R² are identical or different and are H or C₁-C₆-alkyl, linear or branched, and/or aryl;
R³ is C₁-C₁₀-alkylene, linear or branched, C₆-C₁₀-arylene, -alkylarylene, or -arylalkylene;
M is Mg, Ca, Al, Sb, Sn, Ge, Ti, Fe, Zr, Ce, Bi, Sr, Mn, Li, Na, K, and/or a protonated nitrogen base;
m is from 1 to 4; n is from 1 to 4; x is from 1 to 4,
and, as component C, from 5 to 25% by weight of a phosphazene of the formula (I) or (II) 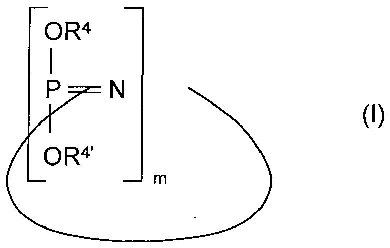 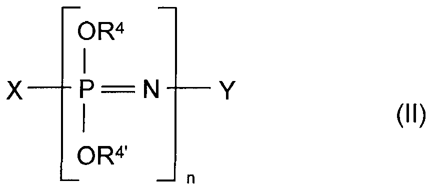 in which R⁴ and R^{4'} are identical or different and are C₁-C₂₀-alkyl, C₆-C₃₀-aryl, C₆-C₃₀-arylalkyl, or C₆-C₃₀-alkyl substituted aryl;
as component D, from 0 to 15% by weight of reaction products of melamine with phosphoric acid and/or with condensed phosphoric acids, or reaction products of condensates of melamine with phosphoric acid and/or with condensed phosphoric acids, and/or else a mixture of the products mentioned, and/or a nitrogen-containing flame retardant other than the abovementioned; as component E, from 0 to 45% by weight of reinforcing materials, and, as component F, from 0.1 to 3% by weight of further additives, where the entirety of the components gives 100% by weight.

2. The flame-retardant compounded polyester material as claimed in claim 1, wherein R¹ and R² are identical or different and are methyl, ethyl, n-propyl, isopropyl, n-butyl, tert-butyl, n-pentyl, and/or phenyl.

3. The flame-retardant compounded polyester material as claimed in claim 1 or 2, wherein R³ is methylene, ethylene, n-propylene, isopropylene, n-butylene, tert-butylene, n-pentylene, n-octylene, or n-dodecylene; phenylene, or naphthylene; methylphenylene, ethylphenylene, tert-butylphenylene, methylnaphthylene, ethylnaphthylene, or tert-butylnaphthylene; phenylmethylene, phenylethylene, phenylpropylene or phenylbutylene.

4. The flame-retardant compounded polyester material as claimed in one or more of claims 1 to 3, comprising from 40 to 74.9% by weight of component A, from 5 to 25% by weight of component B, from 5 to 15% by weight of component C, from 0 to 10% by weight of component D, from 15 to 35% by weight of component E, and from 0.1 to 2% by weight of component F, where the entirety of the components gives 100% by weight.

5. The flame-retardant compounded polyester material as claimed in one or more of claims 1 to 3, comprising from 40 to 72.9% by weight of component A, from 5 to 20% by weight of component B, from 5 to 15% by weight of component C, from 2 to 10% by weight of component D, from 15 to 30% by weight of component E, and from 0.1 to 2% by weight of component F, where the entirety of the components gives 100% by weight.

6. The flame-retardant compounded polyester material as claimed in one or more of claims 1 to 5, wherein the phospharenes involve phenoxyphosphazenes.

7. The flame-retardant compounded polyester material as claimed in one or more of claims 1 to 6, wherein component D involves melamine phosphate, dimelamine phosphate, melamine pyrophosphate, melamine polyphosphates, melam polyphosphates, melem polyphosphates, and/or melon polyphosphates, and/or involves melamine condensates, such as melam, melem, and/or melon.

8. The flame-retardant compounded polyester material as claimed in one or more of claims 1 to 6, wherein component D involves oligomeric esters of tris(hydroxyethyl) isocyanurate with aromatic polycarboxylic acids, benzoguanamine, tris(hydroxyethyl) isocyanurate, allantoin, glycoluril, melamine, melamine cyanurate, dicyandiamide, and/or guanidine.

9. The flame-retardant compounded polyester material as claimed in one or more of claims 1 to 6, wherein component D involves nitrogen compounds of the formulae (VII) to (XII), or a mixture thereof 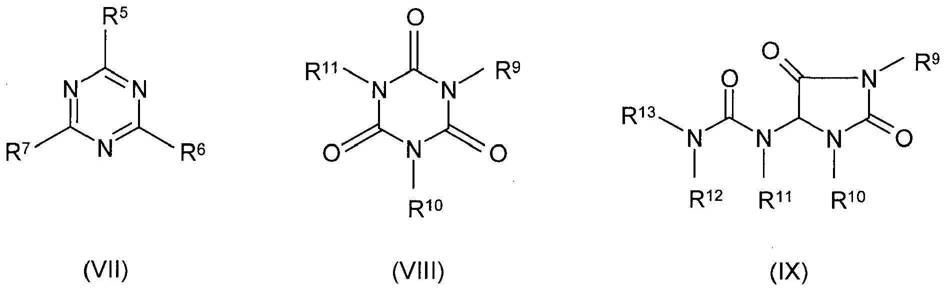 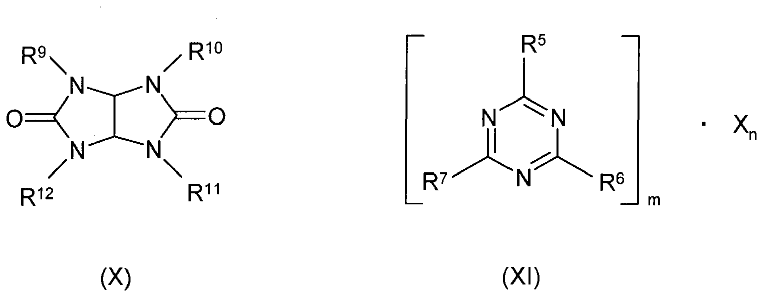 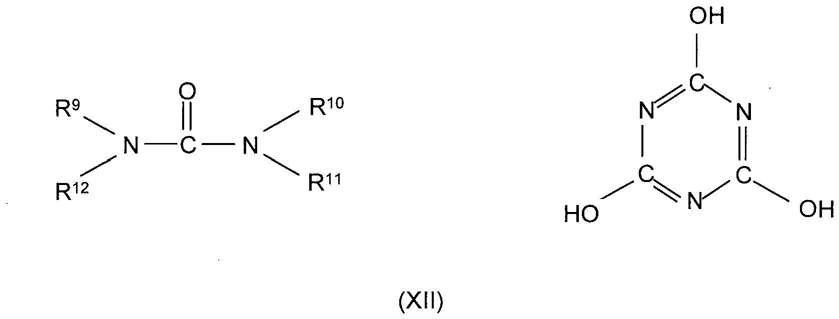 in which
R⁵ to R⁷ are hydrogen, C₁-C₈-alkyl, C₅-C₁₆-cycloalkyl, or -alkylcycloalkyl, optionally substituted with a hydroxy function or with a C₁-C₄-hydroxyalkyl function, C₂-C₈-alkenyl, C₁-C₈-alkoxy, -acyl, -acyloxy, C₆-C₁₂-aryl or -arylalkyl, -OR⁸, and -N(R⁸)R⁹, including systems of N-alicyclic or N-aromatic type,
R⁸ is hydrogen, C₁-C₈-alkyl, C₅-C₁₆-cycloalkyl or -alkylcycloalkyl, optionally substituted with a hydroxy function or with a C₁-C₄-hydroxyalkyl function, C₂-C₈-alkenyl, C₁-C₈-alkoxy, -acyl, -acyloxy, or C₆-C₁₂-aryl or -arylalkyl,
R⁹ to R¹³ are the same groups as R⁸ or else -O-R⁸,
m and n are mutually independently 1, 2, 3, or 4,
X are acids which can form adducts with triazine compounds (VII).

10. The flame-retardant compounded polyester material as claimed in one or more of claims 1 to 9, wherein component E involves mineral particulate fillers based on talc, mica, silicate, quartz, titanium dioxide, wollastonite, kaolin, amorphous silicas, magnesium carbonate, chalk, feldspar, and/or barium sulfate, and/or glass fibers.

11. The flame-retardant compounded polyester material as claimed in one or more of claims 1 to 10, wherein component F involves lubricants and/or mold-release agents.

12. The flame-retardant compounded polyester material as claimed in claim 11, wherein the lubricants and/or mold-release agents involve long-chain fatty acids, their salts, their ester derivatives and/or amide derivatives, montan waxes, and/or low-molecular-weight polyethylene waxes and/or low-molecular-weight polypropylene waxes.

13. A process for producing flame-retardant compounded polyester materials, which comprises mixing components A to F in the proportions by weight mentioned by extrusion in the melt.

14. A fiber, foil, molding, or molded part made of flame-retardant compounded polyester materials as claimed in one or more of claims 1 to 12.

15. The use of fibers, foils, and moldings made of flame-retardant compounded polyester materials as claimed in one or more of claims 1 to 12 in plugs, switches, capacitors, insulation systems, lamp sockets, coil formers, housings, control systems, and other articles.

16. The use of fibers, foils, moldings, and molded parts made of flame-retardant compounded polyester materials as claimed in one or more of claims 1 to 12 in the domestic sector, in industry, in medicine, in motor vehicles, in aircrafts, in ships, in spacecraft, and also in other means of conveyance, in office interiors, and also in other articles and buildings.

## Revendications

1. Composés de polyester ignifuges, contenant en tant que composant A 40 à 89,9 % en poids d'un polyester thermoplastique, en tant que composant B 5 à 25 % en poids d'un sel de l'acide phosphinique de formule (V) et/ou un sel de l'acide diphosphinique de formule (VI) et/ou leurs polymères 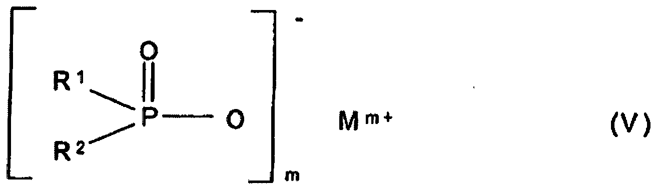 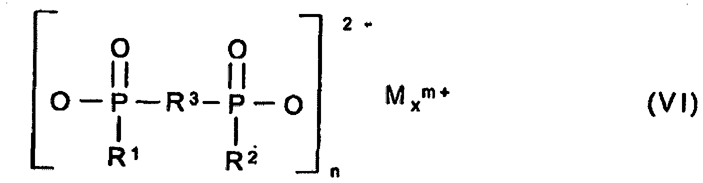 dans lesquelles
R¹, R² sont identiques ou différents et signifient H ou alkyle en C₁-C₆, linéaire ou ramifié, et/ou aryle ; R³ signifie alkylène en C₁-C₁₀, linéaire ou ramifié, arylène, alkylarylène ou arylalkylène en C₆-C₁₀ ;
M signifie Mg, Ca, Al, Sb, Sn, Ge, Ti, Fe, Zr, Ce, Bi, Sr, Mn, Li, Na, K et/ou une base azotée protonée ; m signifie 1 à 4 ; n signifie 1 à 4 ; x signifie 1 à 4 ;
et en tant que composant C 5 à 25 % en poids d'un phosphazène de formule générale (I) ou (II) 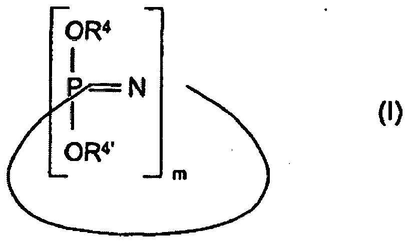 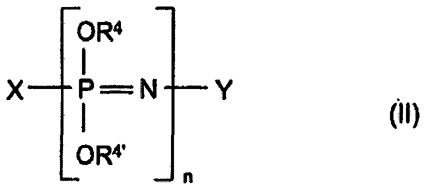 dans lesquelles R⁴ et R^{4'} sont identiques ou différents et représentent alkyle en C₁-C₂₀, aryle en C₆-C₃₀, arylalkyle en C₆-C₃₀ ou aryle substitué par alkyle en C₆-C₃₀ ;
en tant que composant D 0 à 15 % en poids de produits de réaction de mélamine avec de l'acide phosphorique et/ou des acides phosphoriques condensés ou de produits de réaction de produits de condensation de mélamine avec de l'acide phosphorique et/ou des acides phosphoriques condensés et/ou de mélanges des produits cités et/ou d'un autre agent ignifuge azoté que ceux susmentionnés ; en tant que composant E 0 à 45 % en poids d'agents renforçants et en tant que composant F 0,1 à 3 % en poids d'additifs supplémentaires, la somme des composants en poids étant de 100 % en poids.

2. Composés de polyester ignifuges selon la revendication 1, **caractérisés en ce que** R¹, R² sont identiques ou différents et signifient méthyle, éthyle, n-propyle, iso-propyle, n-butyle, tert.-butyle, n-pentyle et/ou phényle.

3. Composés de polyester ignifuges selon la revendication 1 ou 2, **caractérisés en ce que** R³ signifie méthylène, éthylène, n-propylène, iso-propylène, n-butylène, tert.-butylène, n-pentylène, n-octylène ou n-dodécylène ; phénylène ou naphtylène ; méthylphénylène, éthylphénylène, tert.-butylphénylène, méthylnaphtylène, éthylnaphtylène ou tert.-butylnaphtylène ; phénylméthylène, phényléthylène, phénylpropylène ou phénylbutylène.

4. Composés de polyester ignifuges selon une ou plusieurs des revendications 1 à 3, contenant 40 à 74,9 % en poids de composant A, 5 à 25 % en poids de composant B, 5 à 15 % en poids de composant C, 0 à 10 % en poids de composant D, 15 à 35 % en poids de composant E et 0,1 à 2 % en poids de composant F, la somme des composants en poids étant de 100 % en poids.

5. Composés de polyester ignifuges selon une ou plusieurs des revendications 1 à 3, contenant 40 à 72,9 % en poids de composant A, 5 à 20 % en poids de composant B, 5 à 15 % en poids de composant C, 2 à 10 % en poids de composant D, 15 à 30 % en poids de composant E et 0,1 à 2 % en poids de composant F, la somme des composants en poids étant de 100 % en poids.

6. Composés de polyester ignifuges selon une ou plusieurs des revendications 1 à 5, **caractérisés en ce que** les phospharènes sont des phénoxyphosphazènes.

7. Composés de polyester ignifuges selon une ou plusieurs des revendications 1 à 6, **caractérisés en ce que** le composant D est le phosphate de mélamine, le phosphate de dimélamine, le pyrophosphate de mélamine, des polyphosphates de mélamine, des polyphosphates de mélame, des polyphosphates de mélème et/ou des polyphosphates de mélone et/ou des produits de condensation de mélamine, tels que le mélame, le mélème et/ou la mélone.

8. Composés de polyester ignifuges selon une ou plusieurs des revendications 1 à 6, **caractérisés en ce que** le composant D correspond à des esters oligomères d'isocyanurate de tris(hydroxyéthyle) avec des acides polycarboxyliques aromatiques, la benzoguanamine, l'isocyanurate de tris(hydroxyéthyle), l'allantoïne, le glycourile, la mélamine, le cyanurate de mélamine, le dicyandiamine et/ou la guanidine.

9. Composés de polyester ignifuges selon une ou plusieurs des revendications 1 à 6, **caractérisés en ce que** le composant D correspond à des composés azotés de formule (VII) à (XII) ou leurs mélanges 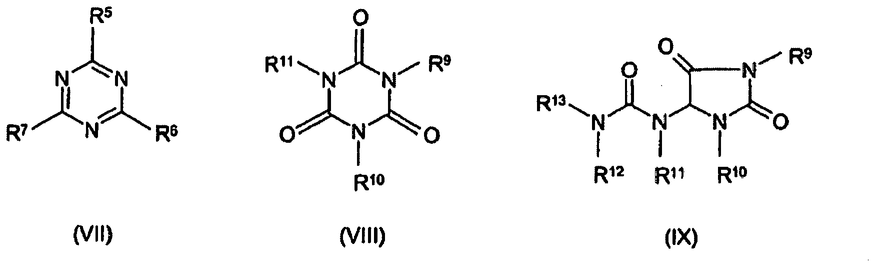 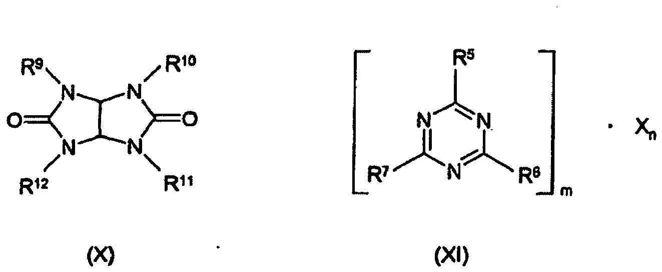 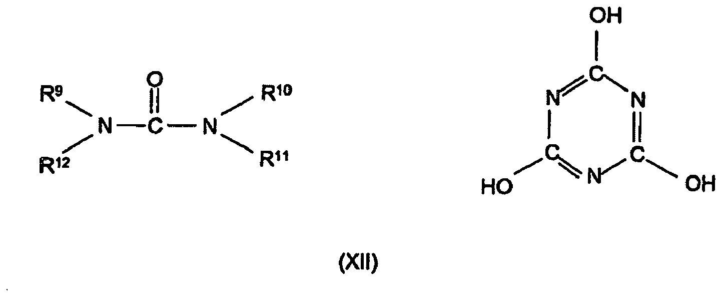 dans lesquelles
R⁵ à R⁷ signifient hydrogène, alkyle en C₁-C₈, cycloalkyle ou alkylcycloalkyle en C₅-C₁₆, éventuellement substitué avec une fonction hydroxy ou hydroxyalkyle en C₁-C₄, alcényle en C₂-C₈, alcoxy, acyle, acyloxy en C₁-C₈, aryle ou arylalkyle en C₆-C₁₂, -OR⁸ et -N(R⁸)R⁹, ainsi que N-alicyclique ou N-aromatique,
R⁸ signifie hydrogène, alkyle en C₁-C₈, cycloalkyle ou alkylcycloalkyle en C₅-C₁₆, éventuellement substitué avec une fonction hydroxy ou hydroxyalkyle en C₁-C₄, alcényle en C₂-C₈, alcoxy, acyle, acyloxy en C₁-C₈, aryle ou arylalkyle en C₆-C₁₂,
R⁹ à R¹³ signifient les mêmes groupes que R⁸, ainsi que -0-R⁸, m et n signifient indépendamment l'un de l'autre 1, 2, 3 ou 4,
X signifie des acides qui peuvent former des adduits avec des composés de triazine (VII).

10. Composés de polyester ignifuges selon une ou plusieurs des revendications 1 à 9, **caractérisés en ce que** le composant E correspond à des charges particulaires minérales à base de talc, de mica, de silicate, de quartz, de dioxyde de titane, de wollastonite, de kaolin, de silices amorphes, de carbonate de magnésium, de craie, de feldspath et/ou de sulfate de baryum et/ou des fibres de verre.

11. Composés de polyester ignifuges selon une ou plusieurs des revendications 1 à 10, **caractérisés en ce que** le composant F correspond à des agents lubrifiants et/ou démoulants.

12. Composés de polyester ignifuges selon la revendication 11, **caractérisés en ce que** les agents lubrifiants et/ou démoulants sont des acides gras à chaîne longue, leurs sels, leurs dérivés esters et/ou leurs dérivés amides, des cires de lignite et/ou des cires de polyéthylène et/ou de polypropylène de faible poids moléculaire.

13. Procédé de fabrication de composés de polyester ignifuges, **caractérisé en ce que** les composants A à F sont mélangés par extrusion à l'état fondu en les proportions en poids indiquées.

14. Fibres, films, corps moulés et pièces moulées à base de composés de polyester, ignifuges selon une ou plusieurs des revendications 1 à 12.

15. Utilisation de fibres, de films et de corps moulés à base de composés de polyester ignifuges selon une ou plusieurs des revendications 1 à 12 dans des prises, des commutateurs, des condensateurs, des systèmes d'isolation, des culots de lampes, des corps de bobine, des boîtiers, des mécanismes de commande et d'autres articles.

16. Utilisation de fibres, de films, de corps moulés et de pièces moulées à base de composés de polyester ignifuges selon une ou plusieurs des revendications 1 à 12 dans le domaine ménager, dans l'industrie, en médecine, dans des automobiles, dans des aéronefs, dans des navires, dans des véhicules aérospatiaux, ainsi que dans d'autres moyens de locomotion, dans des équipements de bureaux, ainsi que dans d'autres articles et bâtiments.
